# NEUE EUROPÄISCHE PATENTSCHRIFT

(11) **EP 2 119 486 B2**
(45) Veröffentlichungstag und Bekanntmachung des Hinweises auf die Entscheidung über den Einspruch: **17.03.2021**
(45) Hinweis auf die Patenterteilung: 25.04.2012
(21) Anmeldenummer: 09006498.1
(22) Anmeldetag: 14.05.2009
(51) Int. Cl.: B01D 35/143, C02F 1/28

(54) **Wechselanzeige für eine Wasserfiltervorrichtung**
Indicator for exchanging a cartridge used in a water filtration device
Indicateur de réchange pour une cartouche employée dans un dispositif de filtre à eau

(30) Priorität: 14.05.2008 DE 102008023488
(43) Veröffentlichungstag der Anmeldung: 18.11.2009
(73) Patentinhaber: BWT water+more GmbH, 5310 Mondsee (AT)
(72) Erfinder: Stefan, Bender, 65232 Taunusstein (DE)
(74) Vertreter: Friderichs, Gunther

(56) Entgegenhaltungen:
- EP-A1- 1 169 954
- EP-A1- 1 892 221
- WO-A-03/028848
- WO-A-2005/097293
- WO-A-2008/058632
- DE-B3-102004 014 646
- DE-B3-102006 006 230
- US-B2- 6 491 879
- Vorbenutzung Brita Elemaris XL, 2005

## Beschreibung

### Gebiet der Erfindung

Die Erfindung betrifft einen Deckel mit einer Wechselanzeige für eine Wasserfiltervorrichtung.

### Hintergrund der Erfindung

Wechselanzeigen für Wasserfiltervorrichtungen sind bekannt.

Wasserfiltervorrichtungen mit austauschbaren Filterpatronen werden insbesondere im Haushalt verwendet. Aber auch im Gastronomiebereich, insbesondere für Kaffeemaschinen, werden zum Reinigen und/oder Enthärten des Wassers austauschbare Filterkartuschen verwendet.

Die europäische Offenlegungsschrift EP 0 891 952 A1 (Brita) zeigt eine gattungsgemäße Wechselanzeige für eine Wasserfiltervorrichtung. Diese Wechselanzeige weist Mittel zum Zählen der Anzahl der Betätigungen eines Öffnungsmechanismus sowie einen Zeitmesser auf. So wird errechnet, wann eine Filterkartusche verbraucht ist und über eine optische Anzeige wird signalisiert, dass der Benutzer die Filterkartusche austauschen muss. Nach dem Austausch der Filterpatrone muss der Benutzer eine Rücksetztaste drücken, um die Anzeige wieder in ihren Ausgangszustand zu versetzen.

Nachteilig an derartig bekannten Wechselanzeige ist, dass für eine korrekte Funktion der Wechselanzeige der Benutzer einen Deckel der Einfüllöffnung bei jedem Einfüllen öffnen und schließen muss.

Es hat sich in der Praxis gezeigt, dass einige Benutzer den Deckel der Einfüllöffnung ständig geöffnet lassen, wodurch die Wechselanzeige ein erneutes Einfüllen nicht registriert und letztlich eine zu lange Lebensdauer der Kartusche angezeigt wird. In anderen Anwendungsfällen wird wiederum der Deckel der Einfüllöffnung geöffnet und geschlossen, ohne Wasser einzufüllen, wodurch die Wechselanzeige frühzeitig die Notwendigkeit eines Kartuschenaustausches signalisiert. Derartiges unnötiges Öffnen und Schließen der Einfüllöffnung wird häufig von Kindern beim Spielen vorgenommen.

Das Dokument WO 2008/058632 A1 zeigt eine Kanne mit einer Wechselanzeige, bei welcher ein Zähler über eine Einfüllöffnung betätigt wird.

Die internationale Offenlegungsschrift WO 2005/097293 A1 beschreibt eine Wasserfiltervorrichtung, bei der die Anzahl an Füllzyklen durch einen Füllstandssensor bestimmt wird.

Aus der internationalen Offenlegungsschrift WO 03/028848 A1 ist weiter bekannt, die Häufigkeit der Filterzyklen einer Wasserfiltervorrichtung indirekt über eine Durchflussmessung in der zur Befüllung dienenden Öffnung zu ermitteln.

Schließlich zeigt die deutsche Patentschrift DE 10 2004 014 646 B3 einen Behälterdeckel für eine Wasserfiltervorrichtung, der eine Einfüllöffnung aufweist, die sich beim Einfüllen von Wasser automatisch öffnet und nach dem Füllvorgang selbsttätig wieder schließt. Die Wasserfiltervorrichtung enthält jedoch keine Zählvorrichtung bzw. Filterwechselanzeige.

Das Dokument EP 1 892 221 A1 zeigt einen Deckel für eine Wasserfiltervorrichtung mit einer Wechselanzeige und einem Kippschalter.

### Aufgabe der Erfindung

Es ist eine Aufgabe der Erfindung, die Zuverlässigkeit einer Wechselanzeige für Wasserfiltervorrichtungen zu erhöhen.

Insbesondere ist es Aufgabe der Erfindung, die Bedienung einer Wasserfiltervorrichtung zu vereinfachen, insbesondere soll die Fehlbedienungsgefahr reduziert werden.

### Zusammenfassung der Erfindung

Die Aufgabe der Erfindung wird bereits durch einen Deckel für eine Wasserfiltervorrichtung mit einer Wechselanzeige für eine Wasserfiltervorrichtung nach Anspruch 1 gelöst.

Bevorzugte Ausführungsformen und Weiterbildungen der Erfindung sind den jeweiligen Unteransprüchen zu entnehmen.

Die Erfindung betrifft einen Deckel mit einer Wechselanzeige für eine Wasserfiltervorrichtung mit einer austauschbaren Filterpatrone. Der Deckel weist zumindest eine Einfüllöffnung auf, welche ihrerseits ein Schließelement aufweist. Das Schließelement dient zum Öffnen und Schließen der Einfüllöffnung, wobei unter Schließen im Sinne der Erfindung nicht notwendigerweise ein wasserdichtes Verschließen gemeint ist, sondern es genügt ein zumindest teilweises Bedecken der Einfüllöffnung, wodurch zumindest ein optisches Verschließen signalisiert wird oder zumindest das Eindringen von Staub in größeren Mengen verhindert wird.

Die Wechselanzeige weist einen elektronischen Zählmechanismus auf, der mit dem Schließelement zusammenwirkt.

Unter Zusammenwirken wird verstanden, dass der elektronische Zählmechanismus beim Errechnen des Wechselintervalls die Betätigung des Schließelementes berücksichtigt. Es versteht sich, dass neben dem Öffnen des Schließelementes auch andere Faktoren, wie zum Beispiel die Zeitdauer seit dem letzten Wechsel der Filterpatrone mit eingehen können.

Das Schließelement ist derart ausgebildet, dass es sich beim Einfüllen von Wasser zumindest teilweise öffnet und dabei den Zählmechanismus aktiviert. Es wird also eine Lösung vorgeschlagen, bei der das Schließelement, welches mit dem elektronischen Zählmechanismus zusammenwirkt, nicht manuell geöffnet wird, sondern durch den Druck oder die Gewichtskraft des eindringenden Wassers.

So wird zum einen erreicht, dass der Benutzer nicht manuell ein Schließelement öffnen muss. Weiter wird eine Einhand-Benutzung einer mit der Wechselanzeige ausgestatteten Wasserfiltervorrichtung ermöglicht.

Des Weiteren wird die Gefahr von Fehlbedienungen reduziert, da das Schließelement bevorzugterweise nicht mit einem Griff zum manuellen Öffnen und Schließen verbunden ist.

Unter Aktivieren des Zählmechanismus im Sinne der Erfindung wird nicht nur das Weiterzählen um eine Befüllung bei einmaliger Betätigung des Schließelementes verstanden, wie es bei einer Ausführungsform der Erfindung vorgesehen ist. Die Erfindung ermöglicht vielmehr auch, wie es bei einer weiteren Ausführungsform der Erfindung vorgesehen ist, die Berücksichtigung der Dauer des Einfüllvorgangs. So kann auf die Menge des eingefüllten Wassers rückgeschlossen werden, insbesondere, wenn sich vor oder nach dem Schließelement eine Verengung oder eine Strömungsdrossel befindet, welche die Durchflussgeschwindigkeit derart reduziert, dass die Öffnungszeit als hinreichend genaues Maß für die Menge des eingefüllten Wassers verwendet werden kann.

Gemäß der Erfindung ist der elektronische Zählmechanismus derart ausgebildet, dass er erst nach einer vorgegebenen Öffnungszeit des Schließelementes weiterzählt, beziehungsweise das Öffnen beim Errechnen der Lebensdauer der Filterpatrone berücksichtigt. So ist sichergestellt, dass ein einmaliges Betätigen des Schließelementes, etwa mit dem Finger, sich nicht auf die Berechnung des Wechselintervalls auswirkt. Bei diesem zeitverzögerten Aktivieren kommt der Wechselanzeige die Tatsache zugute, dass das Einfüllen von Wasser typischerweise eine längere Zeitdauer in Anspruch nimmt.

Bei einer Weiterbildung der Erfindung umfasst das Schließelement einen Schwimmer oder ist als Schwimmer ausgebildet. So wird beim Erreichen des maximalen Füllstandes ein automatisches Schließen des Schließelementes bewirkt. Der Benutzer hat so eine bessere Kontrolle, wann die Wasserfiltervorrichtung hinreichend gefüllt ist.

Bei einer Weiterbildung der Erfindung kann der elektronische Zählmechanismus beim Erreichen eines maximalen Füllstandes ein optisches oder akustisches Signal generieren, wodurch der Benutzer erkennt, dass die Wasserfiltervorrichtung gefüllt ist. Dazu muss das Schließelement sich nicht völlig schließen, sondern es reicht ein Aufschwimmen des Schließelementes auf der Wasseroberfläche aus, um zu erkennen, dass ein vorgegebener maximaler Füllstand erreicht ist.

Bei einer bevorzugten Ausführungsform der Erfindung weist das Schließelement einen Magneten auf. Der Magnet ist vorzugsweise an einem Fortsatz des Schließelementes angeordnet. Insbesondere ist ein Schließelement vorgesehen, welches an einem Scharnier gelagert ist. Vorzugsweise erfolgt die Lagerung randseitig an einer Seite des Schließelementes, wobei der Fortsatz auf der gegenüberliegenden Seite des Scharniers angeordnet ist. Über den Magneten kann der elektronische Zählmechanismus aktiviert beziehungsweise betätigt werden. Hierzu wird bei einer bevorzugten Ausführungsform der Erfindung ein Magnetschalter, insbesondere ein Reed-Relais verwendet, welches in dem elektronischen Zählmechanismus integriert ist.

Bei dieser Ausführungsform sind keine mechanischen Komponenten notwendig. Der elektronische Zählmechanismus kann vielmehr als hermetisch verschlossenes Modul ausgebildet sein, in welchem sämtliche Elektronik des elektronischen Zählmechanismus integriert ist.

Bei einer alternativen Ausführungsform der Erfindung kann die Betätigung des Zählmechanismus auch kapazitiv erfolgen. Hierbei kann auf einen Magneten am Schließelement verzichtet werden. Es reicht vielmehr aus, wenn sich beispielsweise der zuvor beschriebene Fortsatz des Schließelementes dem elektronischen Zählmechanismus annähert.

Bei einer bevorzugten Ausführungsform der Erfindung ist eine Feder vorgesehen, welche das Schließelement in unbelastetem Zustand in einer geschlossenen Stellung hält. Über eine derartige Feder lässt sich auf besonders einfach Weise ein Drehmoment erzeugen, welches im Ruhezustand das Schließelement geschlossen hält. Beim Einfüllen von Wasser reicht der Druck beziehungsweise die Gewichtskraft des Wassers aber aus, um das Schließelement aufzudrücken. Nach dem Einfüllvorgang wird das Schließelement durch die Feder automatisch geschlossen.

Der elektronische Zählmechanismus weist eine Anzeige, beispielsweise eine LCD-Anzeige sowie einen Schalter zum Rücksetzen auf.

Bei einer weiteren bevorzugten Ausführungsform der Erfindung ist die Einfüllöffnung als Trichter ausgebildet, wobei das Schließelement im Wesentlichen am unteren Ende des Trichters angeordnet ist.

Beim Einfüllen von Wasser, welches mit nur geringem Druck aus einem Hahn fließt, kann sich so das Wasser in dem Trichter sammeln und das Schließelement allein durch seine Gewichtskraft öffnen.

Bei einer weiteren bevorzugten Ausführungsform der Erfindung ist das Schließelement zumindest 5 mm, vorzugsweise zumindest 10 mm und besonders bevorzugt zumindest 20 mm von einem oberen Rand der Einfüllöffnung beabstandet. Neben der zuvor beschriebenen Öffnung des Schließmechanismus alleine aufgrund der Gewichtskraft des Wassers wird durch die Beabstandung des Schließelementes vom oberen Rand die Fehlbedienungsgefahr reduziert.

Das Schließelement kann als Schwimmer ausgebildet sein, so dass es sich beim Erreichen eines vorgegebenen Wasserstandes schließt.

Beim Aufschwimmen des als Schwimmer ausgebildeten Schließelements kann, wie es bei einer Weiterbildung der Erfindung vorgesehen ist, ein optisches und/oder akustisches Signal ausgegeben werden.

Zusätzlich zum elektronischen Zählmechanismus, der mit dem Schließelement zusammenwirkt und so die Anzahl der Befüllungen zählt, kann der Zählmechanismus Mittel zum Berücksichtigen der Zeit, die seit dem letzten Wechsel der Filterpatrorie vergangen ist, aufweisen. So kann neben einer Vielzahl der Füllvorgänge auch das Alter der eingesetzten Filterkartusche berücksichtigt werden. Eine derartige Vorrichtung ist aus der EP 0 891 952 A1 bekannt.

Die Mittel zum Berücksichtigen der Zeit können durch den Benutzer anhaltbar sein. So ist es möglich, das Weiterzählen der Zeit in längeren Zeitspannen, in denen beispielsweise der Benutzer im Urlaub ist, abzuschalten. Es hat sich herausgestellt, dass in Zeitspannen längerer Nichtnutzung, in denen ggf. sogar die Filterkartusche austrocknet, das Filtermaterial sich kaum oder gar nicht zersetzt.

Vorzugsweise sind die Mittel zum Berücksichtigen der Zeit über einen Schalter, der gleichzeitig zum Rücksetzen des Zählmechanismus dient, anhaltbar. So kann auf einen zusätzlichen Schalter verzichtet werden. Die Unterscheidung zwischen dem Anhalten der Mittel zum Berücksichtigen der Zeit und einem Rücksetzen kann beispielsweise durch die Dauer der Betätigung erfolgen. Beispielsweise dient ein kurzes Drücken des Schalters dem Abschalten des Weiterzählens der Zeit, wohingegen ein längeres Drücken des Schalters die Wechselanzeige rücksetzt.

Eine Wasserfiltervorrichtung kann den zuvor beschriebenen Deckel mit einer Wechselanzeige umfassen.

Sämtliche, für die Wechselanzeige notwendigen Komponenten können, wie es bei einer bevorzugten Ausführungsform der Erfindung vorgesehen ist, in dem Deckel für die Wasserfiltervorrichtung integriert sein.

### Kurzbeschreibung der Zeichnungen

Die Erfindung soll im Folgenden bezugnehmend auf die Zeichnungen Fig. 1 bis Fig. 5 näher erläutert werden.
- Fig. 1: zeigt schematisch ein Ausführungsbeispiel eines Deckels für eine Wasserfiltervorrichtung mit einer Wechselanzeige in einer perspektivischen Ansicht,
- Fig. 2 bis Fig. 4: zeigen eine schematische Schnittansicht eines Deckels mit einer Wechselanzeige in verschiedenen Betätigungszuständen,
- Fig. 5: zeigt eine Wasserfiltervorrichtung mit einer Wechselanzeige.

### Detaillierte Beschreibung der Zeichnungen

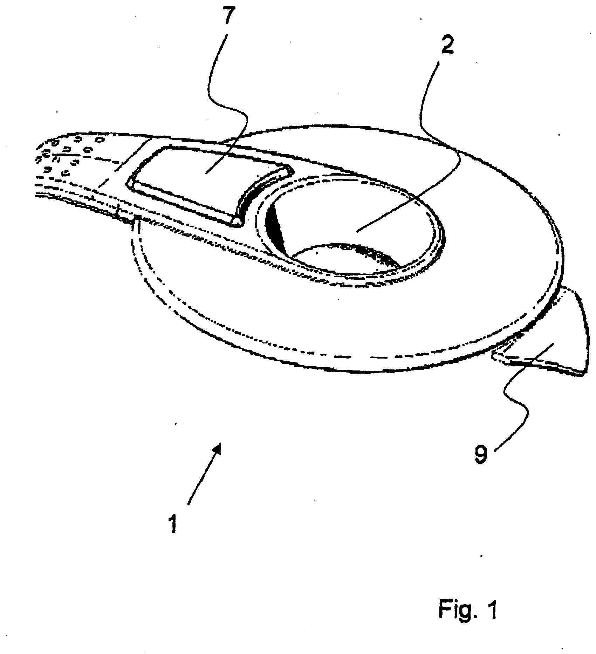

In Fig. 1 ist schematisch ein Deckel 1 mit einer Wechselanzeige für eine Wasserfiltervorrichtung dargestellt. Der Deckel umfasst eine Einfüllöffnung 2, welche als Trichter ausgebildet ist sowie ein Elektronikmodul 7, in welchem ein elektronischer Zählmechanismus (nicht dargestellt) angeordnet ist. Über das Elektronikmodul 7, welches über ein Display (nicht dargestellt) verfügt, wird beim Erreichen des Endes der Lebenszeit einer Filterpatrone ein optisches Signal generiert.

Weiter ist am vorderen Rand des Deckels eine Klappe 9 vorgesehen, die sich beim Ausgießen des Wassers aus der Wasserfiltervorrichtung (nicht dargestellt) öffnet.

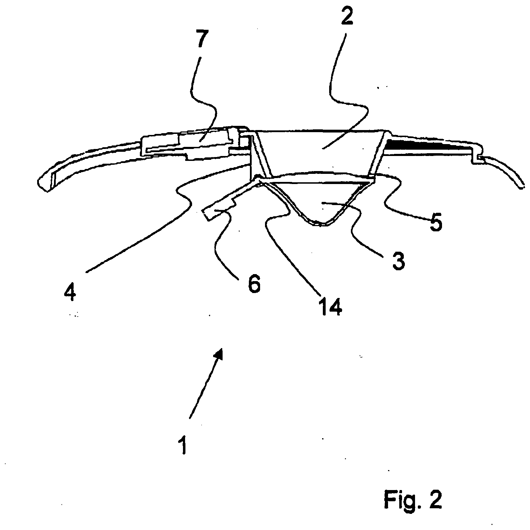

Fig. 2 zeigt schematisch einen Deckel 1 mit einer Wechselanzeige in einer Schnittansicht.

Unterhalb der trichterförmig ausgebildeten Einfüllöffnung 2 ist ein Schließelement 3 angeordnet, welches zugleich als Schwimmer ausgebildet ist.

Das Schließelement 3 ist an einem Scharnier 14 gelagert und wird über eine Feder 4 im Ruhezustand in der hier dargestellten geschlossenen Position gehalten und liegt an einem unteren Rand 5 der trichterförmig ausgebildeten Einfüllöffnung 2 an.

Auf der dem Schließelement 3 gegenüberliegenden Seite des Scharniers 14 weist das Schließelement 3 einen Fortsatz 6 auf, in welchem ein Magnet (nicht dargestellt) integriert ist.

Der Magnet wirkt mit einem in dem Elektronikmodul 7 integrierten Magnetschalter, vorzugsweise einem Reed-Schalter (nicht dargestellt) zusammen.

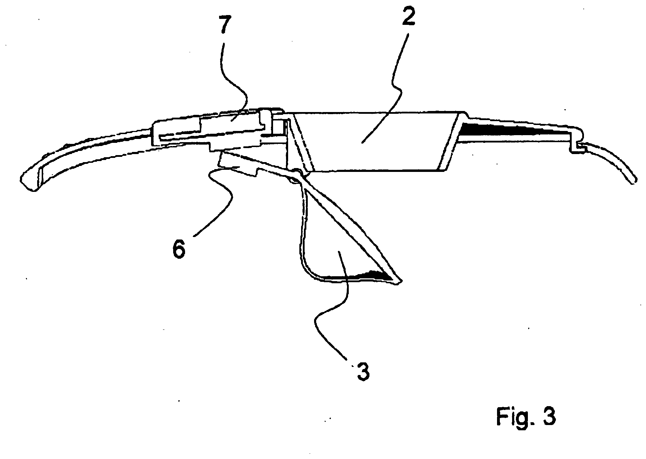

In Fig. 3 ist die Position des Schließelementes 3 beim Füllen der Wasserfiltervorrichtung (nicht dargestellt) gezeigt. Aufgrund des Wasserdrucks und/oder der Schwerkraft des sich in der trichterförmigen Einfüllöffnung 2 stauenden Wassers wird das Schließelement 3 nach unten gedrückt.

Dadurch wird der Fortsatz des Schließelementes 6, welcher mit dem restlichen Schließelement 3 eine Wippe bildet, nach oben gehoben.

Durch die Annäherung des in dem Fortsatz 6 angeordneten Magneten wird der elektronische Zählmechanismus in dem Elektronikmodul 7 aktiviert. In diesem Ausführungsbeispiel ist der Zählmechanismus derart ausgebildet, dass er eine Befüllung der Wasserfiltervorrichtung nur dann registriert, wenn das Schließelement 3 länger als eine vorgegebene Mindestzeit, beispielsweise länger als 3 Sekunden, geöffnet ist.

So wird verhindert, dass kurzzeitiges Betätigen des Schließelementes 3, etwa mit dem Finger, in die Berechnung des Wechselintervalls der Filterpatrone (nicht dargestellt) eingeht.

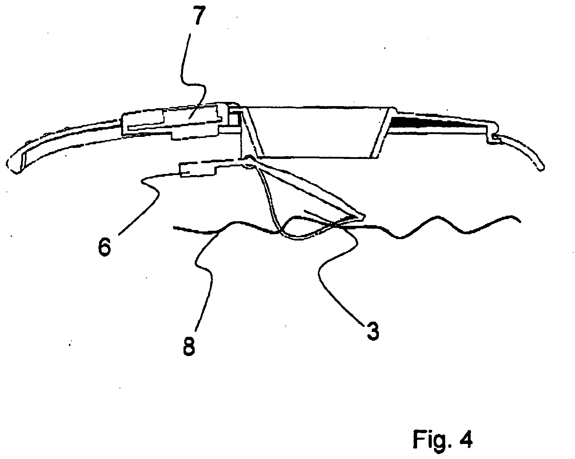

In Fig. 4 ist der Abschluss des Befüllvorgangs dargestellt.

Das in die Wasserfiltervorrichtung (nicht dargestellt) eingefüllte Wasser 8 erreicht das Schließelement 3, wodurch das Schließelement 3, welches als Schwimmer ausgebildet ist, aufschwimmt und angehoben wird.

Der Benutzer erkennt bereits optisch anhand des Aufschwimmens des Schließelementes 3, dass das Ende des Füllvorgangs erreicht ist.

Gleichzeitig bewegt sich der Fortsatz 6 mit dem Magnet von dem Elektronikmodul 7 weg, wodurch auch das Elektronikmodul 7 erkennt, dass der Befüllvorgang beendet ist.

Bei einer besonderen Ausführungsform der Erfindung kann das Elektronikmodul 7 das Ende des Befüllvorgangs zusätzlich optisch oder akustisch signalisieren.

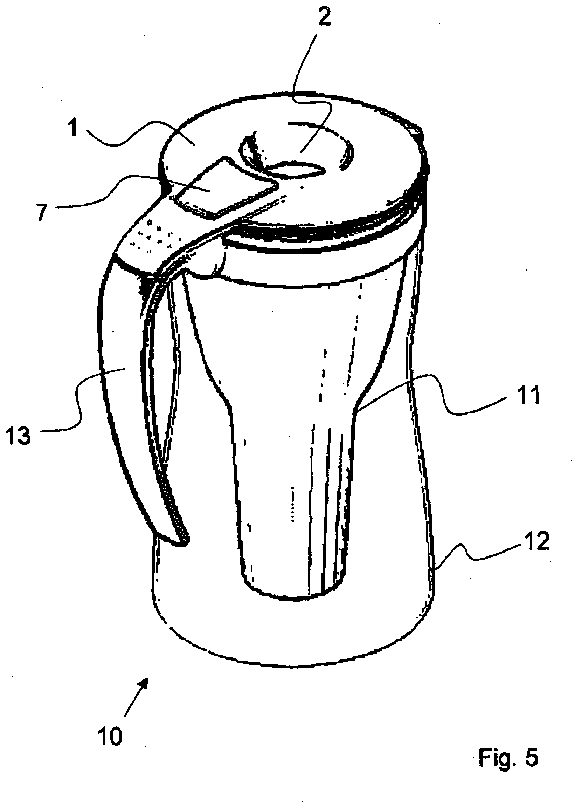

Fig. 5 zeigt einen in einer Wasserfiltervorrichtung 10 eingesetzten Deckel 1 mit einer Wechselanzeige. Die Wasserfiltervorrichtung 10 umfasst eine Kanne 12, in welche ein Trichter 11 eingesetzt ist, in welchen die Filterpatrone (nicht dargestellt) eingesetzt wird.

Das Wasser läuft über die Einfüllöffnung 2 in den Trichter 11, passiert die Filterpatrone (nicht dargestellt) und läuft in die Kanne 12.

Die Kanne weist einen Griff 13 auf, oberhalb dessen bei aufgesetztem Deckel 1 sich das Elektronikmodul 7 befindet.

Es versteht sich, dass die Erfindung nicht auf eine Kombination vorstehend beschriebener Merkmale beschränkt ist, sondern dass der Fachmann sämtliche Merkmale, soweit sinnvoll, kombinieren wird.

### Bezugszeichenliste

- 1: Deckel mit Wechselanzeige
- 2: Einfüllöffnung
- 3: Schließelement
- 4: Feder
- 5: Rand
- 6: Fortsatz
- 7: Elektronikmodul
- 8: Wasser
- 9: Klappe
- 10: Wasserfiltervorrichtung
- 11: Trichter
- 12: Kanne
- 13: Griff
- 14: Scharnier

## Patentansprüche

1. Deckel für eine Wasserfiltervorrichtung, umfassend eine Wechselanzeige für eine Wasserfiltervorrichtung mit einer austauschbaren Filterpatrone, wobei der Deckel zumindest eine Einfüllöffnung umfasst, welche ein Schließelement zum Öffnen und Schließen der Einfüllöffnung aufweist, wobei die Wechselanzeige einen elektronischen Zählmechanismus aufweist, der mit dem Schließelement zusammenwirkt,
**dadurch gekennzeichnet, dass** das Schließelement derart ausgebildet ist, dass es sich beim Einfüllen von Wasser zumindest teilweise öffnet und dabei den Zählmechanismus aktiviert, wobei der elektronische Zählmechanismus eine Anzeige sowie einen Schalter zum Rücksetzen aufweist und wobei der elektronische Zählmechanismus derart ausgebildet ist, dass er erst nach einer vorgegebenen Öffnungszeit des Schließelementes weiter zählt.

2. Deckel nach Anspruch 1, **dadurch gekennzeichnet, dass** das Schließelement zumindest einen Schwimmer aufweist oder als Schwimmer ausgebildet ist.

3. Deckel nach einem der vorstehenden Ansprüche, **dadurch gekennzeichnet, dass** das Schließelement einen Magneten aufweist, über den der elektronische Zählmechanismus betätigbar ist.

4. Deckel nach dem vorstehenden Anspruch, **dadurch gekennzeichnet, dass** der Magnet an einem Fortsatz des Schließelementes angeordnet ist.

5. Deckel nach einem der vorstehenden Ansprüche, **dadurch gekennzeichnet, dass** der elektronische Zählmechanismus als hermetisch verschlossenes Modul ausgebildet ist.

6. Deckel nach einem der vorstehenden Ansprüche, **dadurch gekennzeichnet, dass** das Schließelement an einem Scharnier gelagert ist und auf der gegenüberliegenden Seite des Scharniers ein Fortsatz angeordnet ist, der mit dem elektronischen Zählmechanismus zusammenwirkt.

7. Deckel nach einem der vorstehenden Ansprüche, **dadurch gekennzeichnet, dass** das Schließelement an einem Scharnier gelagert ist und eine Feder das Schließelement in unbelastetem Zustand in einer geschlossenen Stellung hält.

8. Deckel nach einem der vorstehenden Ansprüche, **dadurch gekennzeichnet, dass** der elektronische Zählmechanismus Mittel zum Messen der Öffnungszeit des Schließelementes aufweist.

9. Deckel nach einem der vorstehenden Ansprüche, **dadurch gekennzeichnet, dass** der elektronische Zählmechanismus als Modul ausgebildet ist.

10. Deckel nach einem der vorstehenden Ansprüche, **dadurch gekennzeichnet, dass** die Einfüllöffnung als Trichter ausgebildet ist, wobei das Schließelement im Wesentlichen am unteren Ende des Trichters angeordnet ist.

## Claims

1. Cover for a water filter device, comprising a change indicator for a water filter device having an exchangeable filter cartridge and a cover with at least one filling opening which has a
closure element for opening and closing the filling opening, wherein the change indicator has an electronic counting mechanism which cooperates with the closure element, **characterised in that** the closure element is formed in such a way that it opens at least partially during filling with water and in so doing activates the
counting mechanism, wherein the electronic counting mechanism has a display and a resetting switch and wherein the electronic counting mechanism is formed in such a way that it continues to count only after a preset open time of the closure element.

2. Cover as claimed in claim 1, **characterised in that** the closure element has at least one float or is formed as a float.

3. Cover as claimed in any one of the preceding claims, **characterised in that** the closure element has a magnet by means of which the electronic counting mechanism can be activated.

4. Cover as claimed in the preceding claim, **characterised in that** the magnet is disposed on an extension of the closure element.

5. Cover as claimed in any one of the preceding claims, **characterised in that** the electronic counting mechanism is formed as a hermetically closed module.

6. Cover device as claimed in any one of the preceding claims, **characterised in that** the closure element is mounted on a hinge, and an extension is disposed on the opposite side of the hinge and cooperates with the electronic counting mechanism.

7. Cover as claimed in any one of the preceding claims, **characterised in that** the closure element is mounted on a hinge, and a spring holds the closure element in a closed position in an unloaded state.

8. Cover as claimed in any one of the preceding claims, **characterised in that** the electronic counting mechanism has means for measuring the open time of the closure element.

9. Cover as claimed in any one of the preceding claims, **characterised in that** the electronic counting mechanism is formed as a module.

10. Cover as claimed in any one of the preceding claims, **characterised in that** the filling opening is formed as a funnel, wherein the closure element is disposed essentially at the lower end of the funnel.

## Revendications

1. Couvercle pour un dispositif de filtre à eau, que compris un affichage de remplacement pour un dispositif de filtre à eau comprenant une cartouche filtrante amovible et un couvercle avec au moins une ouverture de remplissage, qui présente un élément de fermeture pour ouvrier et fermer l'élément de fermeture, l'affichage de remplacement présentant un mécanisme de comptage électronique, qui coopère avec l'élément de fermeture, **caractérisé en ce que** l'élément de fermeture est conçu de telle sorte qu'il s'ouvre au moins partiellement lors du remplissage en eau et active alors le mécanisme de comptage, le mécanisme de comptage électronique présentant un affichage et un interrupteur pour la remise à zéro, et **en ce que** le mécanisme de comptage électronique est conçu de telle sorte qu'il continue de compter seulement après un temps d'ouverture prédéfini de l'élément de fermeture.

2. Couvercle selon la revendication 1, **caractérisé en ce que** l'élément de
fermeture présente au moins un flotteur ou est conçu sous forme de flotteur.

3. Couvercle selon l'une des revendications précédentes, **caractérisé en ce que** l'élément de
fermeture présente un aimant, par lequel le mécanisme de comptage électronique peut être actionné.

4. Couvercle selon la revendication précédente, **caractérisé en ce que** l'aimant est disposé sur
un prolongement de l'élément de fermeture.

5. Couvercle selon l'une des revendications précédentes, **caractérisé en ce que** le mécanisme
de comptage électronique est conçu sous forme de module fermé hermétiquement.

6. Couvercle selon l'une des revendications précédentes, **caractérisé en ce que** l'élément de
fermeture est monté sur une charnière et un prolongement, qui coopère avec le mécanisme de comptage électronique, est disposé sur le côté opposé de la charnière.

7. Couvercle selon l'une des revendications précédentes, **caractérisé en ce que** l'élément de
fermeture est monté sur une charnière et un ressort maintient l'élément de fermeture dans l'état non chargé dans une position fermée.

8. Couvercle selon l'une des revendications précédentes, **caractérisé en ce que** le mécanisme
de comptage électronique présente des moyens pour la mesure du temps d'ouverture de l'élément de fermeture.

9. Couvercle selon l'une des revendications précédentes, **caractérisé en ce que** le mécanisme
de comptage électronique est conçu sous forme de module.

10. Couvercle selon l'une des revendications précédentes, **caractérisé en ce que** l'ouverture de
remplissage est conçue sous forme d'entonnoir, l'élément de fermeture étant disposé principalement sur l'extrémité inférieure de l'entonnoir.
